# EUROPEAN PATENT APPLICATION

(11) **EP 2 425 717 A2**
(43) Date of publication of application: **07.03.2012**
(21) Application number: 11002533.5
(22) Date of filing: 28.03.2011
(51) Int. Cl.: A21C 11/16

(54) **Drawing device for edible pasta of the long type, such as spaghetti, tagliatelle, bucatini and cannelloni, and pasta drawn with such device**

(30) Priority: 03.09.2010 IT PC20100019
(71) Applicant: BERNHARDT, MAURO, 29019 San Giorgio Piacentino (IT)
(72) Inventor: BERNHARDT, MAURO, 29019 San Giorgio Piacentino (IT)
(74) Representative: Garavelli, Paolo

(57) **Abstract**

A drawing device (1, 3, 5, 7, 8) for edible pasta (9, 11, 13, 14, 15) of the long type, such as spaghetti (9), tagliatelle (11), bucatini (13) and cannelloni (15), comprises: at least one external body (16) having an hollow interior (18); and a plurality of projections (20) obtained in the hollow interior (18) of the body (16) and adapted to create respective longitudinal valleys (24) in an external surface (26) of the pasta of the long type when the pasta is made pass through the hollow interior (18) during its drawing step of production; and a plurality of recesses (22) obtained in the hollow interior (18) of the body (16) and separating two respective projections (20), and adapted to create respective longitudinal ridges (24) in the external surface (26) of the pasta of the long type.
The edible pasta (9, 11, 13, 14, 15) drawn with such drawing device (1, 3, 5, 7, 8) is also described.

## Description

The present invention refers to a drawing device for edible pasta of the long type, such as spaghetti, tagliatelle, bucatini and cannelloni, and to the pasta drawn with such device.

As known, edible pasta is produced in a variety of shapes and lengths: among them, there is a class of pasta called of the "long" type, including, as a non-limiting example, spaghetti, tagliatelle, bucatini, cannelloni, spaghettoni, tonnarelli, zite, linguine, trenette, tagliolini, lasagne and pappardelle.

While the other class of pasta, called of the "short" type, has many product shapes whose external surface is equipped with small ridges and valleys, namely such short pasta has a kind of lines obtained thereon, the "long" types of pasta all have smooth surfaces, that, when eating them, provide for the user a sticky feeling, which is not as pleasant as the rough feeling a user has when eating a "short" type of pasta.

Moreover, this long type of pasta has often problems when cooking, namely boiling, since it has scarce resistance, and, also when eating, since sauces and seasonings tend to stick thereto with difficulty, since the available external surface of this kind of pasta is small and smooth.

As also known, pasta is produced by preparing varius kind of mixtures and then using dies or drawing and cutting devices, which allow obtaining the final shape of the pasta product itself: in case of the long type of pasta, this is obtained by drawing the pasta, making it pass through drawing devices which give pasta its desired final shape, and by cutting it at the desired length.

No drawing devices are currently known that allow "scoring" the long type of pasta, namely allow making longitudinal lines on the "threads" of pasta going out of the drawing devices.

Therefore, object of the present invention is solving the above prior art problems by providing a drawing device for edible pasta of the long type that allows "scoring" the long type of pasta, namely allows making longitudinal lines on the "threads" of pasta going out of the drawing device.

The above and other objects and advantages of the invention, as will result from the following description, are obtained with a drawing device for edible pasta of the long type and with the resulting pasta as claimed in the respective independent claims. Preferred embodiments and non-trivial variations of the present invention are the subject matter of the dependent claims.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:
- Figures 1 to 5 show five sectional views of preferred embodiments of the drawing device of the present invention, respectively for producing spaghetti in two forms, bucatini, tagliatelle and cannelloni with projections;
- Figures 6 to 10 show five sectional views, respectively of spaghetti in two forms, bucatini, tagliatelle and cannelloni with projections produced with the drawing devices of Figures 1 to 5; and
- Figure 11 shows another preferred pasta with lines of the present invention.

With reference to the Figures, the drawing device 1, 3, 5, 7, 8 for edible pasta 9, 11, 13, 14, 15 of the long type of the present invention is usually made of a bronze ring or box; differently from known drawing devices shaped as a ring or box with a smooth interior in which pasta is drawn when producing it, the drawing device 1, 3, 5, 7, 8 of the present invention substantially comprises:
- at least one external body 16 having an hollow interior 18; and
- a plurality of projections 20 obtained in the hollow interior 18 of the body 16: such projections 20 are adapted to create a plurality of respective longitudinal valleys 24 in an external surface 26 of the pasta 9, 11, 13, 14, 15 of the long type when the pasta 9, 11, 13, 14, 15 is made pass through the hollow interior 18 during its drawing step of production; and
- a plurality of recesses 22 obtained in the hollow interior 18 of the body 16 and separating two respective of the above projections 20: such recesses 22 are adapted to create a plurality of respective longitudinal ridges 28 in the external surface 26 of the pasta 9, 11, 13, 14, 15 of the long type when the pasta 9, 11, 13, 14, 15 is made pass through the hollow interior 18 during its drawing step of production.

In particular as shown in some of the Figures, but not in a limiting way, the drawing device 1, 3, 5, 7, 8 of the invention can have its projections 20 shaped as a tooth in cross section, or the recesses 22 can be shaped as a tooth in cross section.

With the above drawing device 1, 3, 5, 7, 8, it is possible to obtain an edible pasta 9, 11, 13, 14, 15 of the long type, comprising a plurality of longitudinal valleys 24 in an external surface 26 of the pasta 9, 11, 13, 14, 15 of the long type, and a corresponding plurality of respective longitudinal ridges 28 in the external surface 26 of the pasta 9, 11, 13, 14, 15 of the long type.

Also as shown in a non-limiting way, in this edible pasta 9, 11, 13, 14, 15, the ridges 28 can be shaped as a tooth in cross section, or the valleys 24 can be shaped as a tooth in cross section.

The above edible pasta 9, 11, 13, 14, 15 preferably, but not in a limiting way, comprises spaghetti, tagliatelle, bucatini, cannelloni, spaghettini, tonnarelli, zite, linguine, tagliolini, trenette, lasagne, pappardelle and spaghettoni.

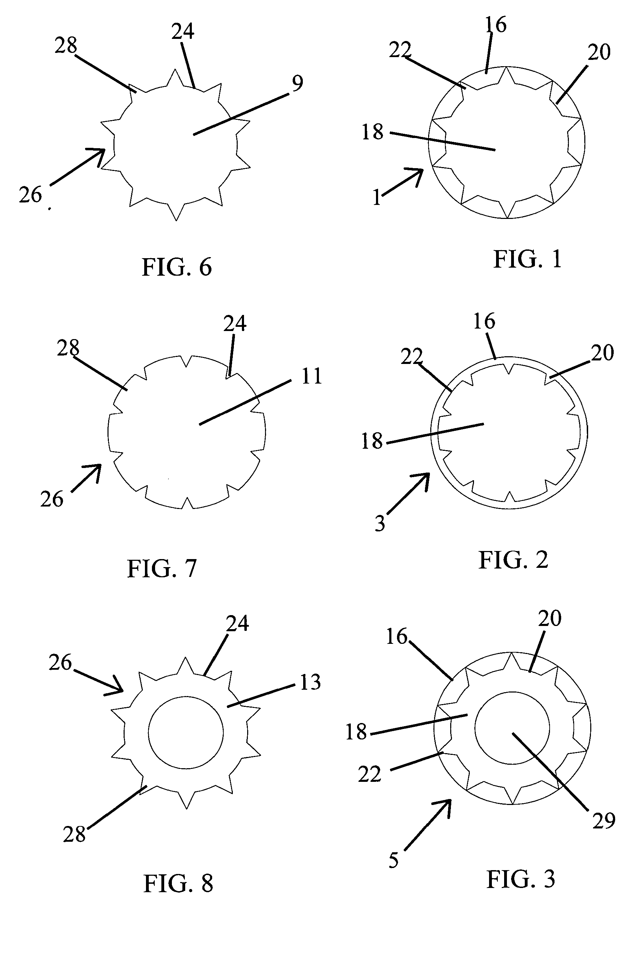

It is clear that the shapes, sizes, numbers and arrangements of the above projections 20, recesses 22, ridges 28 and valleys 24 can change according to the type of pasta used: some non-limiting examples have been provided here with Figures 1 to 11.

For example:
- Figure 1 shows a drawing device 1 with tooth-shaped recesses 22, for spaghetti 9 with tooth-shaped projections 28 as shown in Figure 6;
- Figure 2 shows a drawing device 3 with tooth-shaped projections 20, for spaghetti 11 with tooth-shaped valleys 24 as shown in Figure 7;
- Figure 3 shows a drawing device 5 (with internal core 29 for obtaining the ring shape typical of this kind of pasta) with tooth-shaped recesses 22, for bucatini 13 with tooth-shaped projections 28 as shown in Figure 8;

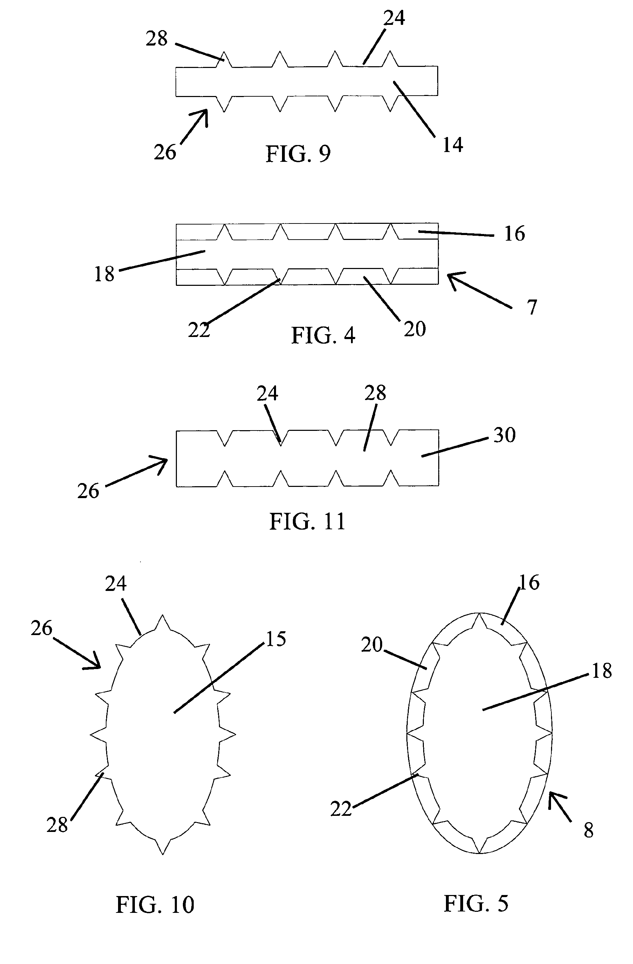

- Figure 4 shows a drawing device 7 with tooth-shaped recesses 22, for tagliatelle 14 with tooth-shaped projections 28 as shown in Figure 9;
- Figure 5 shows a drawing device 8 with tooth-shaped recesses 22, for cannelloni 15 with tooth-shaped projections 28 as shown in Figure 10; and
- Figure 11 shows tagliatelle 30 with tooth-shaped valleys 24 made through a corresponding drawing device (not shown).

The above pasta can be of any type of composition, such as those made using flour, eggs, "green" pasta with vegetables, and the like.

The inventive drawing device 1, 3, 5, 7, 8 and the corresponding pasta 9, 11, 13, 14, 15 of the long type allow obtaining the following advantages:
- the inventive pasta has a pleasant rough feeling upon eating and has an improved capability of being chewed, since the resulting pasta is harder than the known pasta of this type;
- the ridges and valleys obtained on the external surface of the pasta provide the pasta itself with a better resistance to cooking, namely boiling, since they make this type of pasta sturdier and stiffer than before;
- the ridges and valleys obtained on the external surface of the pasta provide the pasta itself with a better absorption of the sauces used as their seasoning, since these sauces are kept in the valleys better, for a longer time and in higher amounts with respect to the usual smooth pasta of the long type.

## Claims

1. Drawing device (1, 3, 5, 7, 8) for edible pasta (9, 11, 13, 14, 15) of the long type, **characterised in that** it comprises:
- at least one external body (16) having an hollow interior (18); and
- a plurality of projections (20) obtained in the hollow interior (18) of said body (16), said projections (20) being adapted to create a plurality of respective longitudinal valleys (24) in an external surface (26) of said pasta (9, 11, 13, 14, 15) of the long type when said pasta (9, 11, 13, 14, 15) is made pass through said hollow interior (18) during its drawing step of production; and
- a plurality of recesses (22) obtained in the hollow interior (18) of said body (16) and separating two respective of said projections (20), said recesses (22) being adapted to create a plurality of respective longitudinal ridges (28) in the external surface (26) of said pasta (9, 11, 13, 14, 15) of the long type when said pasta (9, 11, 13, 14, 15) is made pass through said hollow interior (18) during its drawing step of production.

2. Drawing device (3) according to claim 1, **characterised in that** said projections (20) are shaped as a tooth in cross section.

3. Drawing device (1, 5, 7, 8) according to claim 1, **characterised in that** said recesses (22) are shaped as a tooth in cross section.

4. Drawing device (1, 3, 5, 7, 8) according to any one of claims 1 to 3, **characterised in that** it is adapted to be used with pasta (9, 11, 13, 14, 15) of the long type such as spaghetti, tagliatelle, bucatini, cannelloni, spaghettini, tonnarelli, zite, linguine, tagliolini, trenette, lasagne, pappardelle and spaghettoni.

5. Edible pasta (9, 11, 13, 14, 15) of the long type, **characterised in that** it comprises a plurality of longitudinal valleys (24) in an external surface (26) of said pasta (9, 11, 13, 14, 15) of the long type, and a corresponding plurality of respective longitudinal ridges (28) in the external surface (26) of said pasta (9, 11, 13, 14, 15) of the long type.

6. Edible pasta (9, 13, 14, 15) according to claim 5, **characterised in that** said ridges (28) are shaped as a tooth in cross section.

7. Edible pasta (11, 30) according to claim 5, **characterised in that** said valleys (24) are shaped as a tooth in cross section.

8. Edible pasta (9, 11, 13, 14, 15) according to any one of claims 5 to 7, **characterised in that** it comprises spaghetti, tagliatelle, bucatini, cannelloni, spaghettini, tonnarelli, zite, linguine, tagliolini, trenette, lasagne, pappardelle and spaghettoni.
